Europäisches Patentamt

European Patent Office

Office européen des brevets

(11) Publication number: **0 209 998**
A2

# (12) EUROPEAN PATENT APPLICATION

(21) Application number: 86305031.6

(22) Date of filing: 27.06.86

(51) Int. Cl.⁴: **G 02 B 6/28**

(30) Priority: 17.07.85 US 755929

(43) Date of publication of application:
28.01.87 Bulletin 87/5

(84) Designated Contracting States:
DE FR GB IT NL

(71) Applicant: ANDREW CORPORATION
10500 West 153rd Street
Orland Park Illinois 60462(US)

(72) Inventor: Handerek, Vincent A.
9860 W. 153rd Street
Orland Park Illinois 60462(US)

(72) Inventor: Dyott, Richard B.
15134 Quail Holland Drive
Orland Park Illinois 60462(US)

(74) Representative: MacDougall, Donald Carmichael et al,
Messrs. Cruikshank & Fairweather 19 Royal Exchange
Square
Glasgow G1 3AE, Scotland(GB)

(54) Method of forming optical fiber couplers and improved tuning method using diffusion.

(57) Two optical fibers which have their fields mutually coupled along an interaction length form an optical fiber coupler which is tuned by heating the coupler within the interaction length sufficient to cause diffusion of the core and cladding materials of the two fibers into each other to expand the electrical field distribution and the core region, the heating being terminated when a desired power splitting ratio of the coupler is achieved.

Croydon Printing Company Ltd

EP 0 209 998 A2

## METHOD OF FORMING OPTICAL FIBER COUPLERS AND
## IMPROVED TUNING METHOD USING DIFFUSION

The present invention relates generally to evanescent-wave optical-fiber couplers and, more particularly, to processes for tuning such couplers to achieve desired power-splitting ratios. This invention is particularly useful with directional couplers formed by the fusion of two or more single-mode optical fibers.

An evanescent-wave coupler comprises two or more separate dielectric waveguides which are brought close to each other along a predetermined distance, commonly referred to as the "interaction length". The fields of the two fibers are coupled to each other along the interaction length, thereby coupling guided waves between the two fibers. The degree of coupling of the fields determines the fraction of a guided wave that is coupled from one fiber to the other, commonly referred to as the power-splitting ratio.

In order to "tune" a directional coupler to a desired power-splitting ratio, evanescent-wave couplers have been heated to a softened condition and drawn to reduce the fiber diameters along the interaction length, thereby expanding the fields until the desired ratio is achieved. This drawing or "tapering" technique can produce couplers with the desired power-splitting ratio, but pulling the glass fibers while they are heated to a softened condition is an extremely delicate operation which must be carefully controlled to stop the tapering movement at exactly the correct moment. If the drawing has proceeded too far, the coupler must be discarded or used for a different purpose. Moreover, the apparatus needed to form the tapered couplers is relatively complex; the insertion loss of such couplers is usually higher than desired; and the couplers are delicate and, therefore, need added mechanical protection, all of which adds to the cost.

It is, therefore, a primary object of the present invention to provide an improved method of tuning an evanescent-wave, optical-fiber coupler without tapering or otherwise changing the physical dimensions of the coupler.

It is another object of this invention to provide such a tuning method which permits such couplers to be easily and efficiently tuned to precisely the desired power-splitting ratio.

A further object of the invention is to provide such an improved tuning method which produces a coupler with an extremely low insertion loss, e.g., 0.5 dB and lower.

Yet another object of the invention is to provide such an improved tuning method which is applicable to couplers formed by the fusion of two or more single-mode fibers.

A still further object of the invention is to provide a method of forming an improved evanescent-wave, optical-fiber coupler which has excellent polarization-holding properties, e.g., with polarization extinction ratios as high as 30 dB.

It is still another object of the invention to provide an improved method of forming an evanescent-wave, optical-fiber coupler by the fusion of two or more single-mode fibers. In this connection, a related object is to provide such a method which requires relatively simple equipment and which produces couplers which are robust enough to be used in many applications without any added mechanical protection.

It is also an object of this invention to provide an improved method of forming an optical coupler from fibers having "depressed claddings".

Other objects and advantages of the invention will be apparent from the following detailed description and the accompanying drawings.

In accordance with the present invention, many of the foregoing objectives are realized by providing a method of tuning an optical fiber coupler having at least two optical fibers which have their fields coupled to each other along an interaction length, each of the optical fibers having a core and a cladding with different refractive indices, the method comprising the steps of heating the coupler within the interaction length, without changing the outside dimensions of the coupler, to cause diffusion of the core and cladding materials into each other sufficiently to expand the electric field distributions and the core regions and thereby increase the coupling coefficient within the interaction length; and monitoring changes in the power-splitting ratio of the coupler due to the diffusion and terminating the diffusion when the desired ratio is achieved.

The invention also provides an improved method of forming a directional coupler from a pair of optical fibers each of which comprises a core and cladding having different refractive indices, the core and cladding forming a single-mode guiding region, the core having a non-circular cross-section defining two orthogonal axes which are transverse to the longitudinal axis of the core and which, in combination with the different refractive indices, de-couple waves polarized along the axes, a support layer surrounding the core, the outer surface of the fiber having a non-circular cross-section which forms a reference surface having a predetermined geometric relationship to the guiding region and the orthogonal transverse axes so that the location of the guiding region and the orientation of the axes can be ascertained from the reference surface, the method comprising the steps of etching the two fiber surfaces to be coupled, the etching exposing the cladding on both surfaces; feeding the fibers through a glass tube with the reference surfaces of the two fibers facing each other and with the etched fiber surfaces aligned with each other within the glass tube to define the interaction length of the coupler, heating the glass tube to its softening point, creating a pressure differential between the exterior and interior of the softened glass tube to cause at least a portion of the tube to collapse against the fibers therein, thereby urging the reference surfaces of the fibers into precise alignment with each other.

### BRIEF DESCRIPTION OF THE DRAWINGS

Fig. 1 is a schematic illustration of an evanescent-wave directional coupler formed from two single-mode optical fibers;

Fig. 2 is a transverse cross section of a preferred single-mode optical fiber for use in a directional coupler formed according to the present invention;

Fig. 3 is a transverse section of a directional coupler formed according to the method of the present invention; and

Fig. 4 is a series of graphs illustrating the electric field and refractive index distributions across a directional coupler before and after tuning of the coupler according to the method of the present invention.

While the invention will be described in connection with certain preferred embodiments, it will be understood that it is not intended to limit the invention to those particular embodiments. On the contrary, it is intended to cover all alternatives, modifications and equivalent arrangements as may be included within the spirit and scope of the invention as defined by the appended claims.

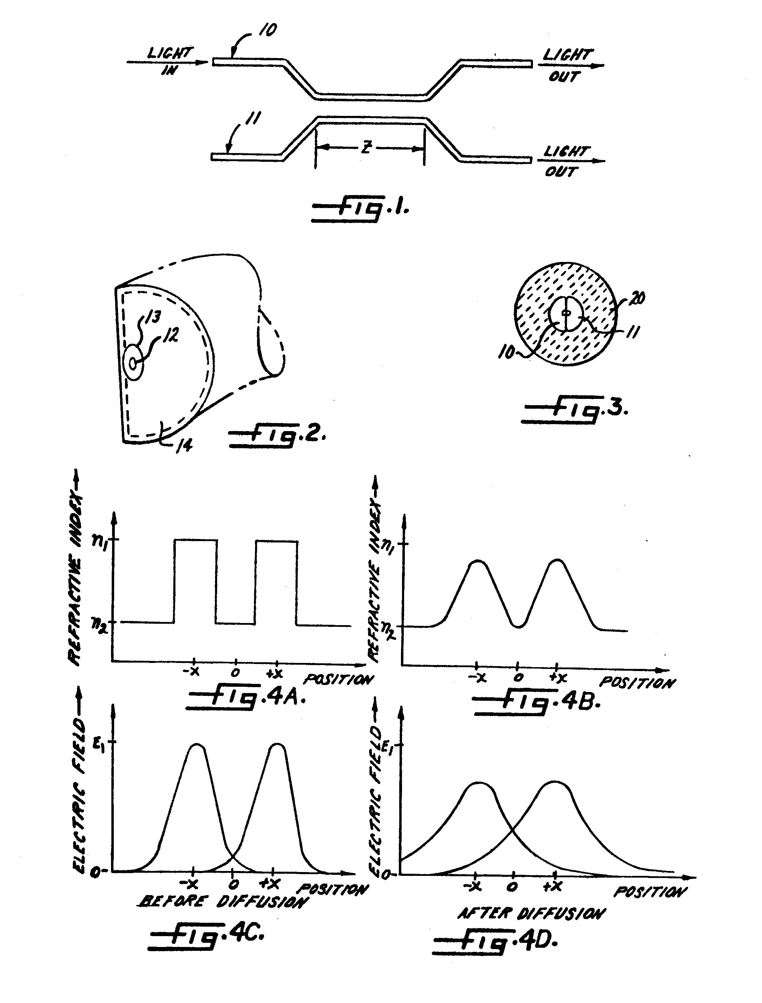

Turning now to the drawings and referring first to Fig. 1, there is schematically illustrated an evanescent-wave directional coupler formed from a pair of single-mode optical fibers 10 and 11. The two fibers 10 and 11, which are dielectric waveguides for guiding optical signals therethrough, are brought close to each other along an interaction length Z within which the fields of the two fibers overlap each other. The following well known equation (1) defines the relationship required between the coupling coefficient C and the coupling beatlength $L_c$ for all energy to be coupled out of one fiber and back again:

$$C = \pi/2L_c \qquad (1)$$

It is also well known that the magnitude of the coupling coefficient C for light of a particular frequency can be expressed in terms of an overlap integral for the field distribution and refractive index profile of the coupler, as follows:

$$C \propto \int\!\!\int_{-\infty}^{\infty} [n^2(x,y) - n_2^2] \, E_1^*(x,y) \cdot E_2(x,y) \, dxdy \tag{2}$$

where $E_1$ and $E_2$ represent the respective field distributions of the two adjacent fibers, and the * denotes complex conjugation. In the special case of evanescent-wave couplers made from fused optical fibers, coupling is normally controlled primarily by expanding the field distributions to increase the coupling coefficient C. As described above, this is conventionally achieved by drawing the fibers while they are heated to a softened condition, to reduce the normalized frequency:

$$V = \frac{2\pi r}{\lambda} [n_1^2 - n_2^2]^{\frac{1}{2}} \tag{3}$$

where r is the radius of the core, $\lambda$ is the free space wavelength, $n_1$ and $n_2$ are the core and cladding indices respectively. In order to tune a coupler to a particular power-splitting ratio during a tapering operation, the coupling performance of the coupler is normally monitored at the desired wavelength so that the tapering movement can be stopped at exactly the correct moment.

The single-mode fibers 10 and 11 in the illustrative coupler are preferably the polarization-holding elliptical-core fibers described in co-pending European Patent Application No. 84301023.2 published under No. 0127257 on 5th December 1984. A transverse cross section of that fiber is illustrated in Fig. 2, from which it can be seen that both the core 12 and the cladding 13 have elliptical transverse cross sections. Of course, the core 12 has a higher index of refraction than the cladding 13 so as to confine and guide optical signals along the axis of the core. As is well known, the index of refraction of the core 12 can be properly chosen in relation to the index of refraction of the cladding 13, the major and minor radii of the elliptical core, and the wavelength of the light signals, to cause the distribution of the electromagnetic fields E and H to occur in a single, well-defined pattern, or mode. This single-mode propagation has the advantage of providing well defined field patterns for coupling the fibers to each other or to other optical devices.

For many applications it is desirable to use a "depressed cladding", which is a cladding having an index of refraction below that of a surrounding support layer 14. Such a "depressed cladding" ensures that any extraneous light launched into the cladding is removed through the support layer.

The elliptical transverse cross section of the core and cladding of the fiber shown in Fig. 2 preserves the polar-ization of optical signals propagated therethrough. More specifically, the elliptical cross section defines two transverse orthogonal axes which permit the de-coupling of waves polarized along those axes. Thus, signals which are launched into such a fiber in alignment with one of the transverse axes of the ellipse tend to remain aligned with that axis as the signals are propagated through the fiber thereby preserving the polarization of the signal.

The preferred fiber of Fig. 2 also has a D-shaped exterior cross section, formed by the external configuration of the support layer 14 which provides the fiber with mechanical strength. The flat surface 15 of the D is parallel to the major axis of the elliptical guiding region. This D-shaped cross section permits the fiber to be easily interfaced to a polarization-sensitive optical device, which can be another fiber of the same configuration, by using the flat surface 15 as an indexing surface.

The guiding region formed by the core 12 and cladding 13 is preferably offset or displaced from the geometric center (i.e., the centroid of mass or center of gravity of the transverse section) toward the flat surface 15 along the perpendicular bisector of the flat surface. Preferably, the guiding region is located within a few average core diameters of the flat surface 15 so that the outer surface of a portion of the fiber may be etched to expose the guiding region at the surface 15, thereby permitting the coupling of optical signals to and from the guiding region through the flat surface 15. With the elliptical core 12 used in the illustrative fiber, the average core diameter is the sum of the major and minor radii of the ellipse defining the core.

A unitary directional coupler of the type illustrated in Fig. 3 can be formed by initially etching the two D-shaped fibers 10 and 11 along the desired interaction length to expose the cladding of both fibers along that length, which is typically a few millimeters. The etched fibers 10 and 11 are then inserted into a glass tube 20 with the flat surfaces 15 facing each other, and the tube 20 is collapsed by drawing a vacuum on both ends of the tube while heating the tube and the fibers therein so that the tube and fibers are all fused together. The tube 20 and the fibers 10 and 11 preferably have about the same coefficients of thermal expansion to avoid thermal stresses after they have been fused together.

The collapsing of the tube 20 under vacuum draws the tube into tight engagement with both the fibers 10 and 11, and forces the fibers into tight engagement with each other, so that the resulting fused, unitary coupler does not contain any voids. The fields of the fibers overlap each other within the region where the fibers were etched, thereby coupling the fibers along that interaction length. Before the fusing operation the bore of the tube 20 has a diameter just slightly greater than the maximum transverse cross-sectional dimension of the combined pair of fibers 10 and 11 so that the guiding regions of the two fibers are automatically aligned when the fibers are inserted into the tube.

In order to protect the fiber leads from strain due to bending at the ends of the coupler, the coupler may be encased in a metal tube with silicone plugs in both ends of the tube to restrain the fibers.

In accordance with one important aspect of the present invention, the evanescent-wave coupler is tuned by heating the coupler within its interaction length, without changing the outside dimensions of the optical fibers, to cause diffusion of the core and cladding materials into each other sufficiently to expand the electric field distributions and thereby increase the coupling coefficient within the interaction length, and monitoring changes in the power-splitting ratio of the coupler due to the diffusion and terminating the diffusion when the desired ratio is achieved.

The diffusion effect in optical fibers and other optical devices such as integrated optics is well known per se. In optical fibers, the core and the cladding necessarily have different compositions in order to provide the required different refractive indices, and it is known that these different compositions inter-diffuse when heated. For example, a typical optical fiber has a core of fused silica doped with germanium atoms to provide a relatively high index of refraction, and a cladding of fused silica doped with fluorine atoms to provide a relatively low index of refraction. During heating of such a fiber, the dopant atoms diffuse through the silica, thereby changing the profile of the dopant concentration, and hence the refractive index profile, across the fiber. These changes increase the overlap integral defined by the equation (2) and hence the coupling coefficient C.

The specific temperature to which the coupler should be heated, and the time during which the coupler should be maintained at that temperature, are determined primarily by the particular composition of the core and cladding. For example, in a coupler formed from a pair of optical fibers made of silica doped with germanium and fluorine to provide refractive indices of 1.500 and 1.4516 in the core and cladding respectively, a 3 dB optical coupler can be made by heating at a temperature of about 1500° C for about 1 to 5 minutes. In general, it is desired to effect the diffusion at the maximum feasible temperature, and for the minimum feasible time period, simply in the interest of maximizing productivity. If productivity is not a factor, however, the desired diffusion can be achieved over a wide range of different combinations of time and temperature. In general, the coupler must be heated to a temperature sufficient to produce diffusion of the core and cladding materials to a degree which will significantly affect the power-splitting ratio.

The effect of diffusion tuning on the refractive index and the electric field of the optical coupler is illustrated in Figs. 4A, 4B, 4C and 4D. Figs. 4A and 4C represent the initial idealized refractive index profile and electric field distribution across the coupler before it has been tuned, assuming each fiber has an ideal, step-index guiding region. It can be seen that there is very little overlap of the electric field distributions across the two fibers. When the optical coupler is formed by fusing the two fibers, there will be more of an overlap in the electric field distributions, but usually the overlap will not be exactly that required to produce the desired power-splitting ratio.

After diffusion tuning in accordance with the present invention, the refractive index profile and electric field distribution across the coupler are changed as illustrated in exaggerated form in Figs. 4B and 4D. Although the center-to-center spacing of the guiding regions of the two
fibers is not affected by the diffusion, and remains fixed
by the original geometry, it can be seen that the
dimensions of the core regions are increased and the modal
fields expanded.   More importantly, the exact degree of
expansion and overlap of the modal fields can be precisely
controlled by the diffusion tuning process, thereby
providing exactly the desired power-splitting ratio by a
simple and readily controllable process.   To a first
approximation, the normalized frequency V is not significantly changed by this tuning process.

The spectral insertion loss of the diffusion-tuned
coupler remains low, e.g., below 0.5 dB, over a wide bandwidth.   The original single-mode operating band of a single
fiber begins at the higher order mode cutoff wavelength and
ends at the attenuation turnup wavelength of the fundamental
modes.   After the fusion step which initially forms the
coupler, both these wavelengths are normally reduced.
During the diffusion tuning step, both wavelengths are
further reduced, but the insertion loss remains low over a
bandwidth which is much wider than the normal single-mode
operating band desired in a directional coupler.   Although
the fusion operation can increase the loss slightly in
certain cases, it has been noted that the diffusion
operation can cause partial recovery of such loss increases.

In accordance with a preferred embodiment of the
invention, the heating of the coupler to effect the desired
diffusion is carried out in multiple stages with the optical
coupler being cooled to a desired test temperature between
successive stages.   The power-splitting ratio is measured
when the coupler is at the desired test temperature, which
is normally the temperature at which the coupler is to be
used.   Thus, the coupler is preferably repeatedly heated
for short periods and allowed to cool between those periods,
thereby producing progressive degrees of diffusion while allowing accurate measurement of the power-splitting ratio under ambient or controlled conditions between successive heating periods. When the desired power-splitting ratio is attained, the process is terminated.

Two lengths of D fiber having a loss of 9 dB/km at 850 nm, each one meter in length, were etched along a 6-millimeter length in about the center of each length of fiber. The etching was effected with a 10% concentration of hydrofluoric acid which was allowed to remain in contact with the fibers for fifty minutes and then removed with distilled water. The etching exposed the cladding on the flat side of the D of each fiber along the 6-millimeter length. The fibers were then fed, with their flat sides facing each other, through a 40 mm length of a Vycor tube having a wall thickness of 0.2mm and with a bore sufficient to accommodate both fibers with about a five-micron clearance. The etched portions of the fibers were aligned with each other in about the center of the Vycor tube. The pair of fibers extending from each end of the Vycor tube were then clamped against opposite sides of a metal wedge, with the flat sides of the fibers facing the wedge, to hold the fibers in a stable position while a vacuum of about 17 inches of mercury was applied to both ends of the tube and the tube was heated until the central region of the tube was observed to collapse onto the fibers. The resulting coupler was then diffusion-tuned with the end of one of the fibers at one end of the coupler receiving a light signal via an LED, and the ends of the fibers at the other end of the coupler both connected to photoelectric detectors with their outputs connected to separate channels of a single chart recorder. A coupler was diffusion tuned by heating the Vycor tube to a temperature of about 1500° C in bursts of about two seconds each. After each heat burst, the traces on the chart recorder were examined, and the heating bursts were stopped when the two traces on the chart recorder were superimposed on each other (indicating a power-splitting ratio of one to one).

Couplers produced by the process described above have exhibited a median insertion loss of about 0.5 dB, with the best couplers having insertion losses too low to measure (using test equipment with an estimated measurement error better than ± 0.09 dB), and a median polarization extinction ratio of 16.6 dB, with the best couplers having a polarization extinction ratio of 30.6 dB.

CLAIMS

1. A method of tuning an optical fiber coupler having at least two optical fibers which have their fields coupled to each other along an interaction length, each of said optical fibers having a core and a cladding with different refractive indices, said method being characterised by

heating said coupler within said interaction length, without changing the outside dimensions of the coupler, to cause diffusion of said core and cladding materials into each other sufficiently to expand the electric field distribution and the core region and thereby increase the coupling coefficient within said interaction length, and

monitoring changes in the power-splitting ratio of said coupler due to said diffusion and terminating the diffusion when the desired ratio is achieved.

2. The method as claimed in claim 1, characterised in that said optical fibers are fused together along said interaction length.

3. The method as claimed in claim 1 or claim 2, characterised in that said heating step is carried out in multiple stages with the coupler being cooled to a desired test temperature between stages, and said monitoring step is carried out when the coupler is at said desired test temperature.

4. The method as claimed in any preceding claim, characterised in that the said optical fibers are enclosed by a glass tube along said interaction length, and the adjacent surfaces of said fibers and glass tube are all fused together to form a unitary structure.

5. The method as claimed in claim 4, characterised in that said tube and fibers are heated and drawn to couple the fields of the fibers prior to said diffusion step.

6. A method of forming a directional coupler from a pair of optical fibers each of which comprises a core and cladding having different refractive indices, said core and cladding forming a single-mode guiding region, said core having a non-circular cross-section defining two orthogonal axes which are transverse to the longitudinal axis of the core and which, in combination with said different refractive indices, de-couple waves polarized along said axes, a support layer surrounding said core, the outer surface of the fiber having a non-circular cross-section which forms a reference surface having a predetermined geometric relationship to said guiding region and said orthogonal transverse axes so that the location of said guiding region and the orientation of said axes can be ascertained from said reference surface, said method being characterised by the steps of

etching the two fiber surfaces to be coupled, the etching exposing the cladding on both surfaces,

feeding said fibers through a glass tube with the reference surfaces of the two fibers facing each other and with the etched fiber surfaces aligned with each other within said glass tube to define the interaction length of the coupler,

heating said glass tube to its softening point,

creating a pressure differential between the exterior and interior of the softened glass tube to cause at least a portion of the tube to collapse against said fibers therein, thereby urging said reference surfaces of said fibers into precise alignment with each other.

7. The method as claimed in claim 6, characterised in that said fibers are supported outside said glass tube at opposite ends thereof during said heating and collapsing steps.

8. The method as claimed in claim 6 or claim 7, characterised in that said glass tube and said fibers have about the same coefficients of thermal expansion.

9. The method as claimed in any one of claims 6-8, characterised in that said pressure differential between the exterior and interior of said softened glass tube is created by drawing a vacuum on the interior of said softened glass tube.

10. The method as claimed in any one of claims 6-9, characterised in that the coupler produced by said collapsing step is tuned by

heating said coupler within said interaction length, without changing the outside dimensions of the coupler, to cause diffusion of said core and cladding materials into each other sufficiently to expand the electric field distribution and the core region and thereby increase the coupling coefficient within said interaction length, and

monitoring changes in the power-splitting ratio of said coupler due to said diffusion and terminating the diffusion when the desired ratio is achieved.

0209998

Fig.1.

Fig.2.

Fig.3.

Fig.4A.

Fig.4B.

BEFORE DIFFUSION

Fig.4C.

AFTER DIFFUSION

Fig.4D.